# EUROPEAN PATENT APPLICATION

(11) **EP 4 803 186 A1**
(43) Date of publication of application: **09.09.2026**
(21) Application number: 26157707.6
(22) Date of filing: 10.02.2026
(51) Int. Cl.: B01J 8/00, B01J 8/02

(54) **THERMAL MANAGEMENT SYSTEM FOR CATALYTIC REACTORS**

(30) Priority: 20.02.2025 US 202519058610
(71) Applicant: Aerospace Carbon Solutions LLC, Evendale, OH 45215 (US)
(72) Inventor: ERNO, Daniel, Niskayuna, 12309-1027 (US); RUSH, Brian Magann, Niskayuna, 12309-1027 (US)
(74) Representative: Openshaw & Co.

(57) **Abstract**

A reactor and methods of operating are described herein. In some approaches, the reactor (300) comprises one or more first regions (302) in thermal communication with one or more second regions (304). The one or more first regions (302) define a reaction domain and comprise a catalyst bed (308). The one or more second regions (304) define a heat spreading domain and comprise one or more vapor chamber (310). In some embodiments, the one or more first regions (302) and the one or more second regions (304) are integrally formed. In some embodiments, the reactor (100) comprises one or more third regions (306) in thermal communication with the one or more first regions (302) and/or the one or more second regions (304). The one or more third regions (306) define a thermal management region and contain a thermal management fluid (126).

## Description

### TECHNICAL FIELD

These teachings relate generally to catalytic reactors and more particularly to thermal management systems for catalytic reactors.

### BACKGROUND

In the field of chemical manufacturing, catalytic reactors are commonly used for facilitating various chemical processes. In some approaches, catalytic reactors may be used for the production of synthetic gas ("syngas" which is a mixture of carbon monoxide and hydrogen) and sustainable aviation fuel (SAF). Maintaining operating temperatures of the catalytic reactors within specific ranges is important in these applications to provide high conversion rates and selectivity, thereby contributing to the overall efficiency and sustainability of the production processes. Accordingly, a thermal management system for catalytic reactors may be desirable.

### BRIEF DESCRIPTION OF DRAWINGS

Various needs are at least partially met through provision of the thermal management system for catalytic reactors described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 illustrates a cross-section of a reactor in accordance with various embodiments of these teachings;
FIG. 2 illustrates a schematic view of a reactor in accordance with various embodiments of these teachings;
FIG. 3 illustrates a schematic view of a reactor in accordance with various embodiments of these teachings;
FIG. 4 illustrates a schematic view of a reactor in accordance with various embodiments of these teachings;
FIG. 5 illustrates a schematic view of a reactor in accordance with various embodiments of these teachings;
FIG. 6 illustrates a cut away view of a vapor chamber in accordance with various embodiments of these teachings;
FIG. 7 illustrates a cut away view of a vapor chamber in accordance with various embodiments of these teachings;
FIG. 8 illustrates a cut away view of a vapor chamber in accordance with various embodiments of these teachings;
FIG. 9 illustrates a cut away view of a vapor chamber in accordance with various embodiments of these teachings;
FIG. 10 (FIG. 10A and 10B) illustrate a cut away view of a vapor chamber in accordance with various embodiments of these teachings;
FIG. 11 illustrates a cut away view of a vapor chamber in accordance with various embodiments of these teachings;
FIG. 12 (FIG. 12A and 12B) illustrates a cross-sectional view of a reactor and perspective view showing three dimensional unit cells which form the reactor in accordance with various embodiments of these teachings; and
FIG. 13 (FIG. 13A, FIG. 13B, FIG. 13C) illustrates a cross-sectional of a reactor in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The thermal management system for catalytic reactors described herein provides approaches for controlling the temperature of a catalytic reactor. More specifically, the approaches described herein utilize one or more vapor chambers to minimize thermal gradients formed in the catalyst bed, thereby increasing the catalytic reaction efficiency.

In a catalytic reactor, catalysts have a narrow temperature range where they optimally release the product of the reaction. Traditional reactor designs often experience large spatial and temporal temperature gradients within the catalyst bed, resulting in deviations from the target operating temperature. For example, uneven temperature distributions may cause hot zones and cold zones within the catalyst, leading to catalyst deactivation, decreased reaction efficiency, and a reduction of the overall performance of the reactor. Additionally, these temperature gradients are typically managed with complex reactor flow designs and concomitant high pumping power demands for maintaining heating/cooling flows, which can increase operation costs and complexity.

The approaches described herein advantageously provide a multi-domain reactor designed to reduce the occurrence of large spatial and temporal temperature gradients within the catalyst bed. In some configurations, the multi-domain reactor includes a catalyst domain containing a catalyst bed and a heat spreading domain containing one or more vapor chambers. These vapor chambers operate through an evaporation-condensation cycle of a working fluid, providing more uniform heat distributions within the catalyst bed, reducing thermal gradients, and maintaining the catalyst bed within a desired temperature range. This leads to increased reaction efficiency and high product yield. Additionally, more uniform temperature distribution inhibits the formation of hot and cold zones, reducing the risk of catalyst damage and deactivation and extending the catalyst's lifespan. In some configurations, the vapor chambers provide efficient thermal management without the need for additional heating or cooling sources, thereby reducing complexity and operational costs. Furthermore, the vapor chambers provide enhanced thermal control during transient reactor operations.

In addition, the approaches herein provide a versatile reactor design that can be used for various chemical processes, including the production of syngas and sustainable aviation fuel, ensuring optimal performance across different applications. The reactor design is scalable to accommodate different production capacities, ensuring consistent performance regardless of the reactor size.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

The foregoing and other benefits may become clearer upon making a thorough review and study of the following detailed description.

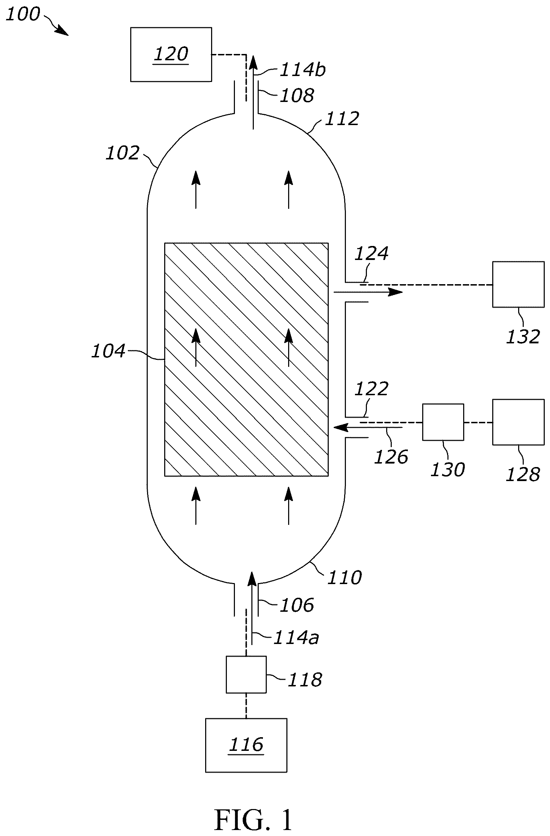

Referring now to the figures, FIG. 1 is a simplified view of a cross-section of an exemplary reactor 100 that is compatible with many of these teachings. The reactor 100 includes a reactor vessel 102, a reactor core 104, an inlet 106, and an outlet 108. The inlet 106 is positioned at a first end 110 of the reactor vessel 102 and outlet is positioned at a second end 112 of the reactor vessel 102. As depicted in FIG. 1, the reactor 100 includes a generally cylindrical reactor vessel 102. It is contemplated that the exemplary reactor 102 depicted in FIG. 1 is by way of example only. In other exemplary embodiments, the reactor vessel may have other suitable configurations. In some examples, the reactor vessel 102 may include a rectangular, or other polygonal cross-section. In some examples, the inlet 106 and outlet 108 may be positioned at any suitable location of the reactor vessel 102.

In operation, a feedstock stream 114a flows through the inlet 106, travels through the reactor core 104 from the first end 110 to the second end 112 and an effluent stream 114b (i.e., the reacted feedstock stream) exits through the outlet 108. More specifically, the feedstock stream 114a is introduced in the reactor vessel 102 through the inlet 106 fluidly coupled (e.g., via piping) to a feedstock supply 116. The feedstock supply 116 may include any suitable tank or component to store the feedstock 114a. One or more heating units 118 may be operably coupled to the feedstock supply 116 to heat the feedstock stream 114a to a suitable temperature based on the desired application of the reactor 100. For example, the feedstock stream 114a may be heated to a temperature in the range of about 150 degrees Celsius to about 950 degrees Celsius. The one or more heating units 118 may include any suitable heating source, such as, for example, a heat exchanger, a preheater, or the like.

The effluent stream 114b exits the reactor vessel 102 through the outlet 108, which is fluidly coupled (e.g., via piping) to a product storage 120. The product storage 120 may include any suitable tank or component to store the effluent stream 114b.

The feedstock stream 114a may include any suitable feedstock. For example, the feedstock stream 114a may include hydrogen (H₂), carbon dioxide (CO₂), methane (CH₄), or syngas (CO + H₂). It is contemplated that the reactor 100 can be used in numerous applications for chemical production and the feedstock may be selected based on the desired application. In one preferred form, the reactor 100 may be used to convert a hydrocarbon feedstock to synthetic gas ("syngas" a mixture of carbon monoxide (CO) and hydrogen (H₂)). In other forms, the reactor 100 may be used for a reverse water gas shift reaction, a Fischer Tropsch reaction, hydrocracking, hydrogenation, methanol synthesis, methanol to olefins, olefin oligomerization, and the like.

In some embodiments, the reactor 100 includes a second inlet 122 and a second outlet 124. The second inlet and outlet 122, 124 may be arranged at any suitable location along the reactor vessel 102. In operation, a thermal management fluid 126 flows through the second inlet 122, travels through and/or around the reactor core 104 and exits through the second outlet 124. More specifically, the thermal management fluid 126 is introduced in the reactor vessel 102 through the second inlet 122 fluidly coupled (e.g., via piping) to a thermal management unit 128. The thermal management unit 128 may include any suitable storage tank, or alternatively, a heat exchanger, cooler or the like. One or more pumps 130 may be operably coupled to the thermal management unit 128 to control a flow rate of the thermal management fluid 126.

The thermal management fluid 126 exits the reactor vessel 102 through the second outlet 124. In some embodiments, the second outlet 124 may be fluidly coupled (e.g., via piping) to a second thermal management unit 132. The thermal management fluid 126 may be any suitable fluid. Suitable fluids include, but are not limited to, air, nitrogen, carbon dioxide, helium and argon. The second thermal management unit 132 may include any suitable storage tank, or alternatively, a heat exchanger, cooler or the like. In some forms, the second inlet and outlet 122, 124 may be fluidly coupled to the same thermal management unit 128.

The thermal management fluid 126 may include any suitable heating or cooling medium to control the temperature of the reactor vessel 102. The thermal management fluid 126 may be selected based on the operating temperatures of the desired application. For example, the thermal management fluid 126 may include water, steam, or the like.

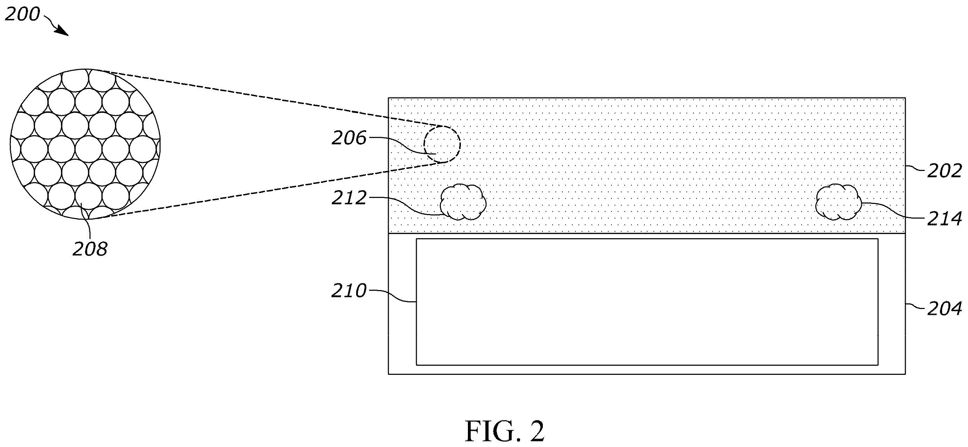

FIGS. 2-5 illustrate various embodiments of the reactor 100 as shown in FIG. 1. It should be noted that while FIGS. 2-5 illustrate configurations of a reactor that have axisymmetric regions, any of the illustrated embodiments may include non-axisymmetric regions. In this regard, rectangular, triangular, cylindrical, hexagonal, octagonal, irregular, or otherwise shaped reactor cores or regions may be used.

Referring to FIG. 2, a two-dimensional cross-sectional view of a configuration of a reactor 200 is shown. The reactor 200 includes at least two domains. More specifically, the reactor 200 includes a first region 202 defining a reaction domain and a second region 204 defining a heat spreading domain. The first region 202 is in thermal communication with the second region 204, which allows temperature variations within the first region 202 to be spatially distributed across a comparatively broad region by the second region 204.

The first region 202 (i.e., the reaction domain) includes a catalyst bed 206. In some forms, the catalyst bed 206 includes a catalyst packed bed with a plurality of catalyst pellets 208. The plurality of catalyst pellets 208 may include any suitable catalyst. In one form, the plurality of catalyst pellets 208 may comprise a nickel-based catalyst. However, it is contemplated that any suitable catalyst may be used including, but not limited to, cobalt-based catalyst, iron-based catalyst, palladium and platinum catalyst, and the like.

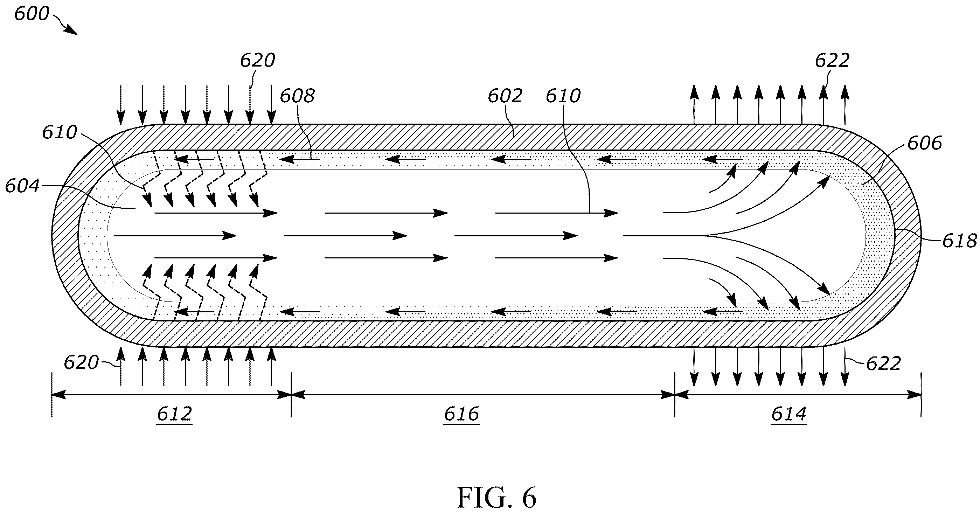

The second region 204 (i.e., the heat spreading domain) includes one or more vapor chambers 210. While FIG. 2 depicts one vapor chamber 210 arranged adjacent to the catalyst bed 206, it is contemplated that the second region 204 may include any suitable number of vapor chambers. The specific structure of the one or more vapor chambers 210 will be described with references to FIGS. 6-11.

Further, it is contemplated that while only one first region 202 and one second region 204 are depicted in FIG. 2, the reactor 200 may include any suitable number of first and second regions. In some forms, one or more first regions 202 may be integrally formed with one or more second regions 204. More specifically, the one or more first regions 202 and the one or more second regions 204 may be manufactured as a single, continuous core with no seams, joints or connections (e.g., the two regions cannot be physically separated). In other forms, the one or more first regions 202 may be integrally nested and intertwined with the one or more second regions 204. The integrally formed or integrally nested and intertwined one or more first and second regions 202, 204 may be manufactured from any suitable manufacturing process including, but not limited to, additive manufacturing, machining, casting, or any other suitable technique.

In operation, a feedstock stream (i.e., the feedstock stream 114 as shown in FIG. 1) flows through the first region 202 and undergoes a reaction(s) within the catalyst bed 206. As the feedstock stream undergoes the reaction(s), the feedstock stream may be cooled incrementally as it flows through the reactor 200 forming a thermal gradient within the first region 202. In addition, the reaction(s) may produce or absorb heat, thereby forming a thermal gradient within the first region 202. For example, a thermal gradient may form between a hot zone 212 (i.e., an increased catalyst bed 206 temperature) and a cold zone 214 (i.e., a decreased catalyst bed 206 temperature). In some forms, the hot zone 212 may be located proximal to a first end 110 of the reactor 100 as shown in FIG. 1 and a cold zone 214 may be located proximal to a second end 112 of the reactor 100 as shown in FIG. 1.

As discussed in greater detail below, the one or more vapor chambers 210 operate by using an evaporation-condensation cycle of a working fluid (not shown) held within the vapor chambers 210. The working fluid (not shown) is maintained at saturated conditions such that the working fluid coexists as both a liquid and a vapor at a saturation temperature and pressure. The saturation conditions allow for efficient internal phase change heat transfer, as the working fluid (not shown) absorbs heat to evaporate and releases heat to condense without significant temperature variation. In other words, the one or more vapor chambers 210 spread heat within the first region 202 (e.g., between the hot zone 212 and the cold zone 214) through internal phase change heat transfer to reduce the thermal gradients within the first region 202. As such, the one or more vapor chambers 210 maintain the catalyst bed 206 within an effective temperature range for desired reaction rates and product yield, thereby increasing the efficiency of the reactor. Advantageously, in some forms, the one or more vapor chambers 210 may eliminate the need for additional heating or cooling sources by uniformly distributing the heat produced during the reaction(s) in the catalyst bed 206.

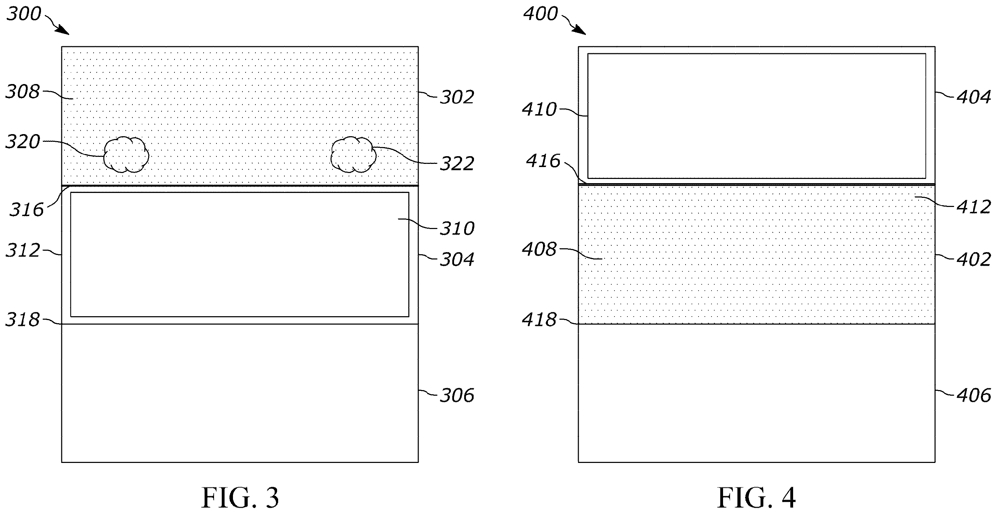

Referring to FIG. 3, a two-dimensional cross-sectional view of a configuration of a reactor 300 is shown. The reactor 300 includes at least three domains. More specifically, the reactor 300 includes a first region 302 defining a reaction domain, a second region 304 defining a heat spreading domain, and a third region 306 defining a thermal management domain. The first region 302, the second region 304, and the third region 306 are in thermal communication. In this configuration, temperature variations within the first region 302 are reduced by the second region 304 and the second region 304 may uniformly transfer or remove heat from the first region 302 via the third region 306.

The first region 302 (i.e., the reaction domain) includes a catalyst bed 308. In some forms, the catalyst bed 308 includes a catalyst packed bed with a plurality of catalyst pellets such as plurality of catalyst pellets 208 shown in FIG. 2. The plurality of catalyst pellets may include any suitable catalyst. In one form, the plurality of catalyst pellets may comprise a nickel-based catalyst. However, it is contemplated that any suitable catalyst may be used including, but not limited to, cobalt-based catalyst, iron-based catalyst, palladium and platinum catalyst, and the like.

The second region 304 (i.e., the heat spreading domain) includes one or more vapor chambers 310. While FIG. 3 depicts one vapor chamber 310 arranged adjacent to the first region 302, it is contemplated that the second region 304 may include any suitable number of vapor chambers. The specific structure of the one or more vapor chambers 310 will be described with references to FIGS. 6-11.

The third region 306 (i.e., the thermal management domain) includes a heating or cooling source including a thermal management fluid (e.g., thermal management fluid 126 shown in FIG. 1). A temperature of the heating or cooling source may be uniform spatially across the third region 306, or alternatively, may be non-uniform with temperature variations spatially across the third region 306. The thermal management fluid may comprise a heating medium or a cooling medium. In some forms, the third region 306 may include one or more conduits or passages fluidly connected to an inlet (such as the second inlet 122 as shown in FIG. 1) and an outlet (such as the second outlet 124 as shown in FIG. 1). It is contemplated that a "heating medium" refers to a fluid with a temperature that is greater than a temperature of the catalyst pellets. For example, the temperature may be any suitable temperature to initiate, sustain, or enhance a catalytic reaction within the reactor. It is also contemplated that a "cooling medium" refers to a fluid with a temperature that is less than a temperature of the catalyst pellets. For example, the temperature may be any suitable temperature to control, reduce, or maintain the thermal conditions within the reactor.

Further, it is contemplated that while only one first region 302, second region 304, and third region 306 are depicted in FIG. 3, the reactor 300 may include any suitable number of first, second, or third regions. In some forms, one or more first regions 302, one or more second regions 304, and one or more third regions 306 may be integrally formed. More specifically, the one or more first regions 302, the one or more second regions 304, and the one or more third regions 306 may be manufactured as a single, continuous core with no seams, joints or connections (e.g., the three regions cannot be physically separated). In other forms, the one or more first regions 302, one or more second regions 304, and one or more third regions 306 may be integrally nested and intertwined. The integrally formed or integrally nested and intertwined one or more first, second, and third regions 302, 304, 306 may be manufactured from any suitable manufacturing process including, but not limited to, additive manufacturing, machining, casting, or any other suitable technique.

As depicted in the FIG. 3, the second region 304 is disposed in a volume 312 between the first region 302 and the third region 306. It should be understood that "between" refers to the spatial relationship where at least one boundary 314 of the second region 304 is adjacent to, in contact, or in thermal communication with the first region 302 and at least one boundary 316 of the second region 304 is adjacent to, in contact, or in thermal communication with the third region 306.

In operation, a feedstock stream (such as the feedstock stream 114 as shown in FIG. 1) flows through the first region 302 and undergoes a reaction(s) within the catalyst bed 308. As the feedstock stream undergoes the reaction(s), the feedstock stream may be cooled incrementally as it flows through the reactor 300 forming a thermal gradient within the first region 302. In addition, the reaction(s) may produce or absorb heat forming a thermal gradient. For example, a thermal gradient may form between a hot zone 320 (i.e., an increased catalyst bed 308 temperature) and a cold zone 322 (i.e., a decreased catalyst bed 308 temperature). In some forms, the hot zone 320 may be located proximal to a first end 110 of the reactor 100 as shown in FIG. 1 and a cold zone 322 may be located proximal to a second end 112 of the reactor 100 as shown in FIG. 1.

As discussed in greater detail below, the one or more vapor chambers 310 operate by using an evaporation-condensation cycle of a working fluid (not shown) held within the vapor chambers 310. The working fluid (not shown) is maintained at saturated conditions such that the working fluid coexists as both a liquid and a vapor at a saturation temperature and pressure. The saturation conditions allow for efficient internal phase change heat transfer, as the working fluid (not shown) absorbs heat to evaporate and releases heat to condense without significant temperature variation. In other words, the one or more vapor chambers 310 spread heat within the first region 302 (e.g., between the hot zone 320 and the cold zone 322) through internal phase change heat transfer to minimize the thermal gradients within the first region 302. As such, the one or more vapor chambers 310 maintain the catalyst bed 308 within an effective temperature range for desired reaction rates and product yield, thereby increasing the efficiency of the reactor.

In addition, alternatively, the one or more vapor chambers 310 may uniformly heat (i.e., the heating medium) or cool (i.e., the cooling medium) the first region 302 via the third region 306 through internal phase change heat transfer. In this manner, the first region 302 may be uniformly heated or cooled, regardless of any local spatial temperature gradients of the thermal management fluid within the third region 306.

Referring to FIG. 4, a two-dimensional cross-sectional view of a configuration of a reactor 400 is shown. The reactor 400 may be configured in a substantially similar manner as the reactor core in FIG. 3. As can be seen, the reactor 400 includes at least three domains. More specifically, the reactor 400 includes a first region 402 defining a reaction domain, a second region 404 defining a heat spreading domain, and a third region 406 defining a thermal management domain. The first region 402, the second region 404, and the third region 406 are in thermal communication.

The first region 402 (i.e., the reaction domain) includes a catalyst bed 408. In some forms, the catalyst bed 408 includes a catalyst packed bed with a plurality of catalyst pellets such as plurality of catalyst pellets 208 shown in FIG. 2. The plurality of catalyst pellets may include any suitable catalyst. In one form, the plurality of catalyst pellets may comprise a nickel-based catalyst. However, it is contemplated that any suitable catalyst may be used including, but not limited to, cobalt-based catalyst, iron-based catalyst, palladium and platinum catalyst, and the like.

The second region 404 (i.e., the heat spreading domain) includes one or more vapor chambers 410. While FIG. 4 depicts one vapor chamber 410 arranged adjacent to the first region 402, it is contemplated that the second region 404 may include any suitable number of vapor chambers. The specific structure of the one or more vapor chambers 410 will be described with references to FIGS. 6-11.

The third region 406 (i.e., the thermal management domain) includes a, heating or cooling source including a thermal management fluid (e.g., thermal management fluid 126 shown in FIG. 1). A temperature of the heating or cooling source may be uniform spatially across the third region 406, or alternatively, may be non-uniform with temperature variations spatially across the third region 406. The thermal management fluid may comprise a heating medium or a cooling medium. In some forms, the third region 406 may include one or more conduits or passages fluidly connected to an inlet (such as the second inlet 122 as shown in FIG. 1) and an outlet (such as the second outlet 124 as shown in FIG. 1).

In contrast to the embodiment of FIG. 3, the first region 402 is disposed in a volume 412 between the second region 404 and the third region 406. It should be understood that "between" refers to the spatial relationship where at least one boundary 416 of the first region 402 is adjacent to, in contact, or in thermal communication with the second region 404 and at least one boundary 418 of the first region 402 is adjacent to, in contact, or in thermal communication with the third region 406.

As discussed in greater detail below, the one or more vapor chambers 410 operate by using an evaporation-condensation cycle of a working fluid (not shown) held within the vapor chambers 410. The working fluid (not shown) is maintained at saturated conditions such that the working fluid coexists as both a liquid and a vapor at a saturation temperature and pressure. The saturation conditions allow for efficient internal phase change heat transfer, as the working fluid (not shown) absorbs heat to evaporate and releases heat to condense without significant temperature variation. In this manner, the one or more vapor chambers 410 spread heat within the first region 402 through internal phase change heat transfer to reduce the thermal gradients within the first region 402. As such, the one or more vapor chambers 410 maintain the catalyst bed 408 within an effective temperature range for desired reaction rates and product yield, thereby increasing the efficiency of the reactor.

In addition, the thermal management fluid (e.g., thermal management fluid 126 shown in FIG. 1) of the third region 406 may heat (i.e., the heating medium) or cool (i.e., the cooling medium) the first region 402. In this manner, thermal gradients formed in the catalyst bed 408 of the first region 402 may be smoothed by both the thermal management fluid and the one or more vapor chambers 410

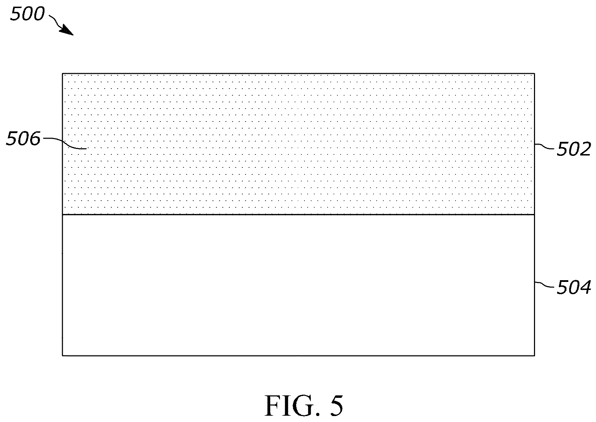

Referring to FIG. 5, a two-dimensional cross-sectional view of a configuration of a reactor 500 is shown. The reactor 500 includes at least two domains. More specifically, the reactor 500 includes a first region 502 defining a reaction domain and a second region 504 defining a thermal management domain.

The first region 502 (i.e., the reaction domain) includes a catalyst bed 506. In some forms, the catalyst bed 506 includes a catalyst packed bed with a plurality of catalyst pellets such as plurality of catalyst pellets 208 shown in FIG. 2. The plurality of catalyst pellets may include any suitable catalyst. In one form, the plurality of catalyst pellets may comprise a nickel-based catalyst. However, it is contemplated that any suitable catalyst may be used including, but not limited to, cobalt-based catalyst, iron-based catalyst, palladium and platinum catalyst, and the like.

The second region 504 (i.e., the thermal management domain) includes a heating or cooling source including a thermal management fluid (e.g., thermal management fluid 126 shown in FIG. 1). A temperature of the heating or cooling source may be uniform spatially across the third region 306, or alternatively, may be non-uniform with temperature variations spatially across the third region 306. The thermal management fluid may comprise a heating medium or a cooling medium. In some forms, the third region 504 may include one or more conduits or passages fluidly connected to an inlet (such as the second inlet 122 as shown in FIG. 1) and an outlet (such as the second outlet 124 as shown in FIG. 1) to transfer heat to or remove heat from the catalyst bed 506.

It is contemplated that while only one first region 202 and second region 204 are depicted in FIG. 5, the reactor 500 may include any suitable number of first and second regions. In some forms, one or more first regions 502 may be integrally formed with one or more second regions 504. More specifically, the one or more first regions 502 and the one or more second regions 504 may be manufactured as a single, continuous core with no seams, joints or connections (e.g., the two regions cannot be physically separated). In other forms, the one or more first regions 502 may be integrally nested and intertwined with the one or more second regions 504. As will be appreciated, the integrally formed one or more first regions 502 and one or more second regions 504 allow for compact reactor geometries with high surface area to volume ratios, tailorable three-dimensional shapes, and weight savings.

The integrally formed or integrally nested and intertwined one or more first and second regions 502, 504 may be manufactured from any suitable manufacturing process including, but not limited to, additive manufacturing, machining, casting, or any other suitable technique.

FIGS. 6-11 illustrate various embodiments of a vapor chamber. The vapor chambers as described in reference to FIGS. 6-11 may be an example of the one or more vapor chambers as shown and described in reference to FIGS. 2-4. The vapor chambers in the embodiments of FIGS. 2-4 may use any one of, or alternatively, a combination of the various embodiments of the vapor chambers described below. It should be noted that any of the various embodiments of the vapor chambers described in reference to FIGS. 6-11 may be designed for 1-, 2-, or 3-dimensional heat transfer. In this regard, the vapor chambers may spread heat along a single axis or multiple axes of the reactor as shown as described in reference to FIGS. 2-4.

Referring to FIG. 6, a cut away side perspective view of a cylindrical vapor chamber 600 is shown. The vapor chamber 600 includes a casing 602 defining an enclosed volume 604, and a wick structure 606. The casing 602 forms a hermetically sealed outer shell of the vapor chamber 600 (i.e., forming a hermetic envelope) and includes an evaporation section 612, a condenser section 614 at an opposite end thereof, and an adiabatic section 616 located between the evaporation section 612 and the condenser section 614. The casing 602 is filled with and holds a working fluid 608, 610, which acts as a heat carrier for transferring thermal energy from the evaporation section 612 to the condenser section 614 through internal phase change heat transfer. The evaporation section 612 is in thermal contact with a heat source (e.g., the hot zone 212 as shown in FIG. 2) to vaporize the working fluid 608,610 from a liquid phase 608 to a vapor phase 610. The condenser section 614 is in thermal contact with a heat sink (e.g., the cold zone 214 as shown in FIG. 2) to condense the vapor phase 610 of the working fluid 608, 610 to a liquid phase 608.

The wick structure 606 is attached to an inner surface 618 of the casing 602. The wick structure 606 includes a porous medium to transport the liquid phase of the working fluid 608 between the condenser section 614 and the evaporation section 612 through capillary forces. The wick structure 606 may be formed of any suitable wick structure. Suitable wick structures may include, but are not limited to, a porous metal wick, a fiber wick, a grooved wick, a mesh wick, a foam wick, or a composite wick.

The working fluid 608, 610 may be any suitable fluid. The working fluid 608, 610 may be selected based on the thermal conductivity, latent heat of vaporization, compatibility and stability. In one example, the working fluid may include pure water. In other examples, the working fluid may include ammonia, ethanol, or the like.

In operation, heat is transferred (i.e., represented as arrows 620) to the evaporation section 612 of the casing 602 (which corresponds to a region of comparatively high local temperature) to cause a liquid phase of the working fluid 608 to evaporate. Then, the vapor phase of the working fluid 610 carries the heat to the condenser section 614 (which corresponds to a region of comparatively lower local temperature). The vapor phase of the working fluid 610 is transported from the evaporation section 612 to the condenser section 614 via pressure forces developed due to the difference in local pressures between the evaporation section 612 (higher pressure) and the condenser section 614 (lower pressure). Heat is released (i.e., represented by arrows 622) through the condenser section 614 of the casing 602 as the vapor phase of the working fluid 610 condenses back to the liquid phase of the working fluid 608. The liquid phase of the working fluid 608 (i.e., condensed liquid) then recirculates back to the evaporation section 612 through gravity or capillary forces to restart the evaporation-condensation cycle. It is contemplated that the evaporation of the liquid phase of the working fluid 608 in the evaporation section 612 acts as a vapor mass source and the condensation of the vapor phase of the working fluid 610 in the condenser section 614 acts as a vapor mass sink. The vapor mass source and sink from the relative heating (i.e., heat absorption represented as arrows 620) of the evaporation section 612 and the cooling (i.e., heat release represented by arrows 622) of the condenser section 614 generate the flow of the vapor phase of the working fluid 610.

In some embodiments, the vapor chamber 600 may be configured as a thermosyphon without the wick structure 606. In this manner, the vapor chamber 600 (e.g., thermosyphon) transports the vapor phase of the working fluid 610 from the evaporation section 612 to the condenser section 614 through pressure forces (e.g., vapor mass source/sink). The liquid phase of the working fluid 608 (i.e., condensed liquid) then recirculates back to the evaporation section 612 through acceleration (e.g. gravity) to restart the evaporation-condensation cycle.

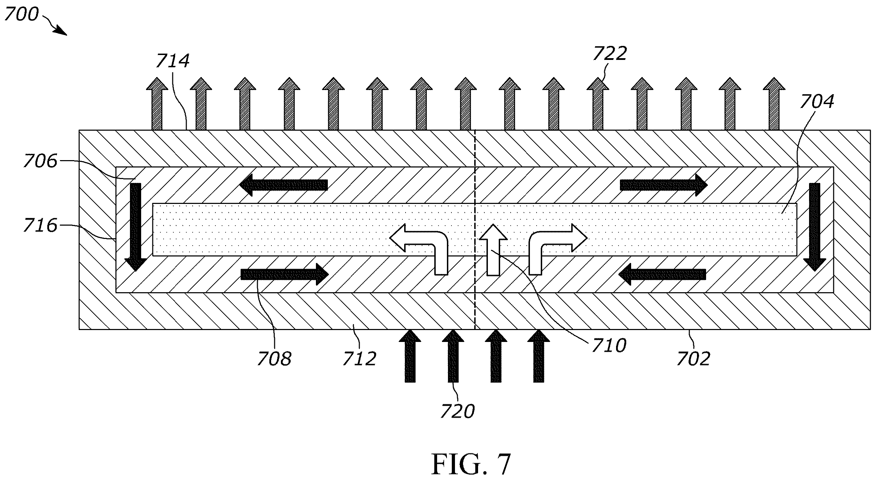

Referring to FIG. 7, a cut away side perspective view of a planar vapor chamber 700 is shown. The vapor chamber 700 includes a casing 702 defining an enclosed volume 704, and a wick structure 706. The casing 702 forms a hermetically sealed outer shell of the vapor chamber 700 (i.e., hermetic envelope) and includes an evaporation section 712, a condenser section 714 at an opposite end thereof. The casing 702 is filled with and holds a working fluid 708, 710, which acts as a heat carrier for transferring thermal energy from the evaporation section 712 to the condenser section 714 through internal phase change heat transfer. The evaporation section 712 is in thermal contact with a heat source (e.g., the hot zone 212 as shown in FIG. 2) to vaporize the working fluid 708,710 from a liquid phase 708 to a vapor phase 710. The condenser section 714 is in thermal contact with a heat sink (e.g., the cold zone 214 as shown in FIG. 2) to condense the vapor phase 710 of the working fluid 708, 710 to a liquid phase 708.

The wick structure 706 is attached to an inner surface 716 of the casing 702. The wick structure 706 includes a porous medium to transport the liquid phase 708 of the working fluid 708,710 between the condenser section 714 and the evaporation section 712 through capillary forces. The wick structure 706 may be formed of any suitable wick structure. Suitable wick structures may include, but are not limited to, a porous metal wick, a fiber wick, a grooved wick, a mesh wick, a foam wick, or a composite wick.

The working fluid 708, 710 may be any suitable fluid. The working fluid 708, 710 may be selected based on the thermal conductivity, latent heat of vaporization, compatibility and stability. In one example, the working fluid may include pure water. . In other examples, the working fluid may include ammonia, ethanol, or the like.

In operation, heat is transferred (i.e., represented as arrows 720) to the evaporation section 712 of the casing 702 to cause a liquid phase of the working fluid 708 to evaporate. Then, the vapor phase of the working fluid 710 carries the heat to the condenser section 714. Heat is released (i.e., represented by arrows 722) through the condenser section 714 of the casing 702 as the vapor phase of the working fluid 710 condenses back to the liquid phase of the working fluid 708. The liquid phase of the working fluid 708 (i.e., condensed liquid) then recirculates back to the evaporation section 712 through capillary forces to restart the evaporation-condensation cycle.

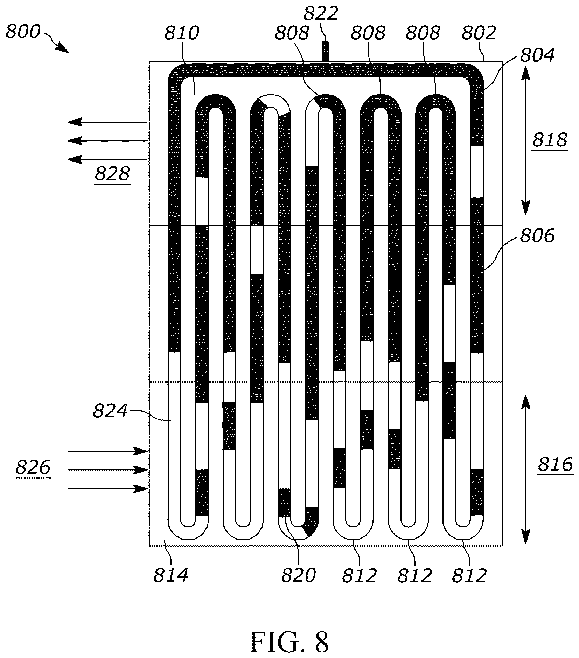

Referring to FIG. 8, a cut away view of a planar vapor chamber 800 is shown. The vapor chamber 800 may be an oscillating heat pipe. The vapor chamber 800 includes a casing 802 defining an enclosed volume 804 holding a working fluid 820, 824, and a hermetically sealed meandering channel 806 (i.e., hermetic envelope). The meandering channel 806 has first u-shaped bends 808 on a first end 810 and second u-shaped bends 812 on a second end 814. In some forms, the first u-shaped bends 808 define an evaporation section 816 and the second u-shaped bends 812 define a condenser section 818. In other forms, the first u-shaped bends 808 define the condenser section 818 and the second u-shaped bends 812 define the evaporation section 816. In yet another form, the distinct evaporation sections 816 and condenser sections 818 may be formed within the straight sections of the meandering channel 806. The evaporation section 816 is in thermal contact with a heat source (e.g., the hot zone 212 as shown in FIG. 2) to vaporize a working fluid 820,824 from a liquid phase 820 to a vapor phase 824. The condenser section 818 is in thermal contact with a heat sink (e.g., the cold zone 214 as shown in FIG. 2) to condense the vapor phase 824 of the working fluid 820,824 to a liquid phase 820.

The working fluid 820,824 may be any suitable fluid. The working fluid 820,824 may be selected based on the thermal conductivity, latent heat of vaporization, compatibility and stability. In one example, the working fluid may include water. In other examples, the working fluid may include ammonia, ethanol, or the like.

The meandering channel 806 is filled with a liquid phase working fluid 820 through port 822. In operation, heat is transferred (i.e. represented by arrows 826) to the evaporation section 816 to cause at least a portion of a liquid phase of the working fluid 820 to evaporate to a vapor phase of the working fluid 824. Then, the vapor phase of the working fluid 824 carries the heat to the condenser section 818. Heat is released (i.e., represented by arrows 828) through the condenser section 818 as the vapor phase of the working fluid 824 condenses back to the liquid phase of the working fluid 820. It is generally contemplated that the phase change between the liquid phase working fluid 820 and the vapor phase working fluid 824 causes oscillations due to pressure variations which drive the liquid phase working fluid 820 and vapor phase working fluid 824 within the meandering channel 806.

In some forms, the vapor chamber 800 includes a hermetically sealed closed-loop meandering channel 806 and the working fluid 820,824 circulates in a continuous loop within the meandering channel 806, driven by oscillations due to pressure variations and phase changes between the liquid phase working fluid 820 and the vapor phase working fluid 824. In other forms, the vapor chamber 800 includes a hermetically sealed open-loop meandering channel 806 having two ends. The working fluid 820, 824 oscillates back and forth between the two ends of the meandering channel 806.

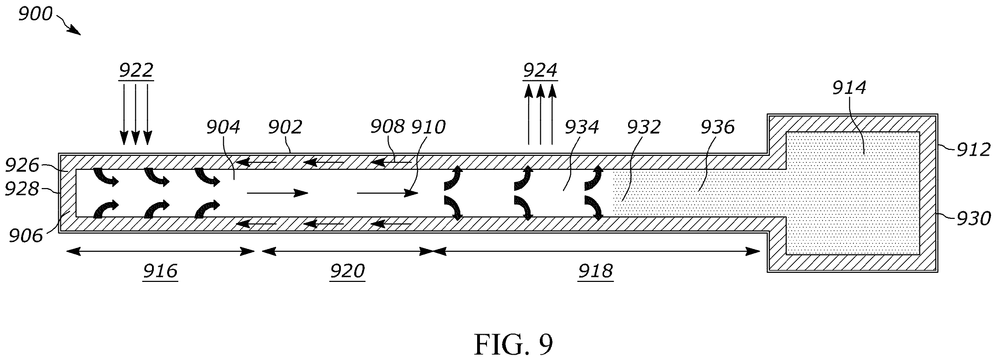

Referring to FIG. 9, a cut away view of a vapor chamber 900 is shown. The vapor chamber 900 may be a variable conductance heat pipe. The vapor chamber 900 includes casing 902 defining an enclosed volume 904, a wick structure 906, and a reservoir 912 filled with a noncondensable gas 914. The casing 902 forms a hermetically sealed outer shell of the vapor chamber 900 (i.e., hermetic envelope) and includes an evaporation section 916, a condenser section 918, and an adiabatic section 920 between the evaporation section 916 and the condenser section 918. The casing 902 is filled with and holds a working fluid 908, 910, which acts as a heat carrier for transferring thermal energy from the evaporation section 916 to the condenser section 918 through internal phase change heat transfer. The evaporation section 916 is in thermal contact with a heat source (e.g., the hot zone 212 as shown in FIG. 2) to vaporize the working fluid 908,910 from a liquid phase 908 to a vapor phase 910. The condenser section 918 is in thermal contact with a heat sink (e.g., the cold zone 214 as shown in FIG. 2) to condense the vapor phase 910 of the working fluid 908, 910 to a liquid phase 908.

The wick structure 906 is attached to an inner surface 926 of the casing 902. The wick structure 906 includes a porous medium to transport the liquid phase 908 of the working fluid 908,910 between the condenser section 918 and the evaporation section 916 through capillary forces. The wick structure 906 may be formed of any suitable wick structure. Suitable wick structures may include, but are not limited to, a porous metal wick, a fiber wick, a grooved wick, a mesh wick, a foam wick, or a composite wick.

The working fluid 908,910 may be any suitable fluid. The working fluid 908,910 may be selected based on the thermal conductivity, latent heat of vaporization, compatibility and stability. In one example, the working fluid may include pure water. In other examples, the working fluid may include ammonia, ethanol, or the like.

In operation, heat is transferred (i.e., represented as arrows 922) to the evaporation section 916 of the casing 902 to cause a liquid phase of the working fluid 908 to evaporate. Then, the vapor phase of the working fluid 910 carries the heat to the condenser section 918. Heat is released (i.e., represented by arrows 924) through the condenser section 918 of the casing 902 as the vapor phase of the working fluid 910 condenses back to the liquid phase of the working fluid 908. The liquid phase of the working fluid 908 (i.e., condensed liquid) then recirculates back to the evaporation section 916 through capillary forces to restart the evaporation-condensation cycle.

During operation, an interface 932 forms between the vapor phase working fluid 910 and the noncondensable gas 914 to define an active region 934 where the vapor phase working fluid 910 condenses and an inactive region 936 of the condenser section 918. The position of the interface 932 shifts based on a temperature in the evaporation section 916 and the vapor pressure in the enclosed volume 904. For example, as the temperature of the evaporation section 916 increases, the vapor pressure in the enclosed volume 904 increases, shifting the interface 932 towards the second end 928 (i.e., the noncondensable gas 914 occupies a smaller portion of the condenser section 918). Thus, the active region 934 is increased in the condenser section 918 to enhance heat dissipation in the vapor chamber 900. Conversely, as the temperature of the evaporation section 916 decreases, the vapor pressure in the enclosed volume 904 decreases, shifting the interface 932 towards the first end 930 (i.e., the noncondensable gas 914 occupies a larger portion of the condenser section 918). Thus, the active region 934 is decreased in the condenser section 918 to reduce the conductance of the vapor chamber 900. In this manner, the heat transport may be selectively controlled (i.e., increased, decreased, or turned off) through the reservoir 912 filled with the noncondensable gas 914. The noncondensable gas may include, but is not limited to, nitrogen, helium, argon, or carbon dioxide.

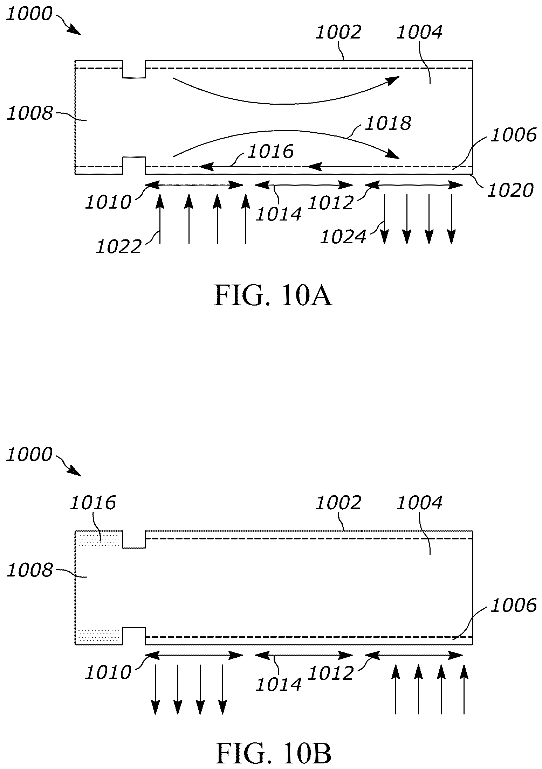

Referring to FIG. 10A and 10B, a cut away view of a vapor chamber 1000 is shown. The vapor chamber 1000 may be a thermal diode heat pipe. The vapor chamber 1000 includes a casing 1002 defining an enclosed volume 1004, a wick structure 1006, and a reservoir 1008. The casing 1002 forms a hermetically sealed outer shell of the vapor chamber 1000 (i.e., hermetic envelope) and includes an evaporation section 1010, a condenser section 1012, and an adiabatic section 1014 between the evaporation section 1010 and the condenser section 1012. The casing 1002 is filled with and holds a working fluid 1016,1018, which acts as a heat carrier for transferring thermal energy from the evaporation section 1010 to the condenser section 1012 through internal phase change heat transfer. The evaporation section 1010 is in thermal contact with a heat source (e.g., the hot zone 212 as shown in FIG. 2) to vaporize the working fluid 1016,1018 from a liquid phase 1016 to a vapor phase 1018. The condenser section 1012 is in thermal contact with a heat sink (e.g., the cold zone 214 as shown in FIG. 2) to condense the vapor phase of the working fluid 1018 to a liquid phase 1016.

The wick structure 1006 is attached to an inner surface 1020 of the casing 1002. The wick structure 1006 includes a porous medium to transport the liquid phase 1016 of the working fluid 1016,1018 between the condenser section 1012 and the evaporation section 1010 through capillary forces. The wick structure 1006 may be formed of any suitable wick structure. Suitable wick structures may include, but are not limited to, a porous metal wick, a fiber wick, a grooved wick, a mesh wick, a foam wick, or a composite wick.

The working fluid 1016,1018 may be any suitable fluid. The working fluid 1016,1018 may be selected based on the thermal conductivity, latent heat of vaporization, compatibility and stability. In one example, the working fluid may include pure water. In other examples, the working fluid may include ammonia, ethanol, or the like.

In operation, heat is transferred (i.e., represented as arrows 1022) to the evaporation section 1010 of the casing 1002 to cause a liquid phase of the working fluid 1016 to evaporate. Then, the vapor phase of the working fluid 1018 carries the heat to the condenser section 918. Heat is released (i.e., represented by arrows 1024) through the condenser section 1012 of the casing 1002 as the vapor phase of the working fluid 1018 condenses back to the liquid phase of the working fluid 1016. The liquid phase of the working fluid 1016 (i.e., condensed liquid) then recirculates back to the evaporation section 1010 through capillary forces to restart the evaporation-condensation cycle.

In normal operation, the liquid phase of the working fluid 1016 (i.e., the condensed liquid) is recirculated to the evaporation section 1010 via the capillary action of the wick structure 1006 to restart the evaporation-condensation cycle. As shown in FIG. 10A, the reservoir 1008 is empty during normal operation. However, when the condenser section 1012 becomes hotter than the evaporation section 1010, the vapor phase of the working fluid 1018 flows back to the evaporation section 1010 and condenses back to the liquid phase of the working fluid 1016. More specifically, as shown in FIG 10B, the vapor phase of the working fluid 1016 flows into the reservoir 1008 and condenses back to the liquid phase of the working fluid 1016. Due to the isolation of the wick structure 1006 in the reservoir 1008, the liquid phase of the working fluid 1016 (i.e., the condensed liquid) is trapped in the reservoir 1008, thereby inhibiting reverse heat flow. Thus, the vapor chamber 1000 provides unidirectional heat transfer for precise thermal regulation and control of reactor performance.

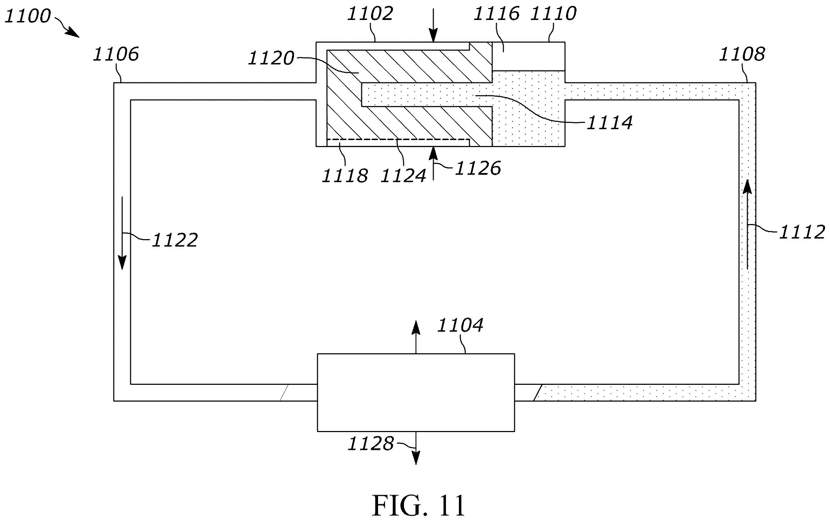

Referring to FIG. 11, a cut away view of a vapor chamber 1100 is shown. The vapor chamber 1100 may be a loop heat pipe. The vapor chamber 1100 includes an evaporator section 1102, a condenser section 1104, a vapor pipe 1106 and a liquid pipe 1108. The evaporator section 1102 includes a hermetic envelope 1110 which forms a hermetically sealed outer shell of the vapor chamber 1100 (i.e., hermetic envelope) to hold a liquid phase of a working fluid 1112, a liquid channel 1114, a reservoir 1116, a vapor channel 1118 and a wick structure 1120. The liquid channel 1114 is disposed at an inner portion of the evaporator section 1102 and the vapor channel 1118 is disposed at an outer portion of the evaporator section 1102. The wick structure 1120 is disposed between the liquid channel 1114 and the vapor channel 1118.

The evaporation section 1102 is in thermal contact with a heat source (e.g., the hot zone 212 as shown in FIG. 2). The condenser section 1104 is in thermal contact with a heat sink (e.g., the cold zone 214 as shown in FIG. 2). In operation, heat is transferred (i.e., represented by arrows 1126) from a heat source (e.g., the hot zone 212 as shown in FIG. 2) to the wick structure 1120 which causes the liquid phase of the working fluid 1112 to evaporate from a surface 1124 of the wick structure 1120. As the liquid phase of the working fluid 1112 is evaporated from the surface 1124, the wick structure 1120 pulls additional liquid phase working fluid 1112 in the reservoir 1116 to the surface 1124 through capillary action. The vapor phase of the working fluid 1122 flows through the vapor channel 1118 into the vapor pipe 1106 via pressure forces to the condenser section 1104. The vapor phase of the working fluid 1122 flows into the condenser section 1104 and releases heat (i.e., represented by arrows 1128) to a heat sink (e.g., the cold zone 214 as shown in FIG. 2) as the vapor phase of the working fluid 1122 condenses back to the liquid phase of the working fluid 1112. The liquid phase of the working fluid 1112 (i.e., the condensed liquid) flows back to the evaporator section 1102 through the liquid pipe 1108 to restart the evaporation-condensation cycle.

The working fluid 1112, 1122 may be any suitable fluid. The working fluid 1016,1018 may be selected based on the thermal conductivity, latent heat of vaporization, compatibility and stability. In one example, the working fluid may include pure water. In other examples, the working fluid may include ammonia, ethanol, or the like.

The wick structure 1006 includes a porous medium to transport the liquid phase of the working fluid 1112 between the reservoir 1116 and the liquid channel 1114 to the surface 1124 of the wick structure 1120. The wick structure 1006 may be formed of any suitable wick structure. Suitable wick structures may include, but are not limited to, a porous metal wick, a fiber wick, a grooved wick, a mesh wick, a foam wick, or a composite wick.

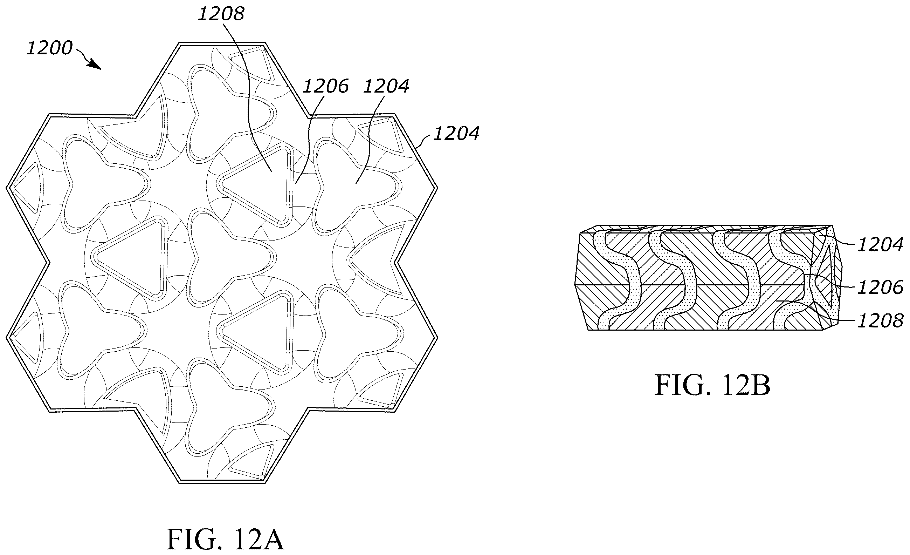

Referring to FIGS. 12 (FIG. 12A and 12B), another embodiment of a configuration of a reactor 1200 is shown. FIG. 12A is a perspective view of a portion of the internal structure of the reactor 1200. FIG. 12B is a perspective view showing three-dimensional unit cells which form the reactor 1200 of FIG. 12A. These unit cells are designed to optimize the integration and functionality of the various domains of the reactor 1200.

As shown in FIG. 12A, the reactor 1200 includes compact solid body 1202 defining three domains. More specifically, the compact solid body 1202 includes a first region 1204 which defines a catalyst domain, a second region 1206 which defines a heat spreading domain, and a third region 1208 which defines a thermal management domain. The first region 1204, and thus the catalyst domain, maintains a similar shape and profile throughout the reactor 1200. The second region 1206, and thus the heat spreading domain, maintains a similar shape and profile throughout the reactor 1200. The third region 1208, and thus the thermal management domain, maintains a similar shape and profile throughout the reactor 1200. Although the cross-sectional shapes of respective regions are generally depicted as triangular, it is contemplated that the respective regions can have any suitable cross-sectional shape including rectangular, circular, oval, or any regular or irregular geometric profile.

The first, second, and third regions 1204, 1206, 1208 are integrally formed. As shown in FIG. 12A, the second region 1206 (i.e., the heat spreading domain) surrounds the first region 1204 (i.e., the catalyst domain). Similarly, the third region 1208 (i.e., the thermal management region) surrounds the second region 1206 (i.e., the heat spreading domain). In such an arrangement, the first, second, and third regions 1204, 1206, 1208 are nested and intertwined within one another. In other words, the second region 1206 is sandwiched between the first region 1204 and the third region 1208 providing integrated thermal management control. The nested configuration provides efficient heat transfer and thermal regulation within the reactor 1200.

The integrally formed reactor 1200 may be manufactured from any suitable manufacturing process including, but not limited to, additive manufacturing, machining, casting, or any other suitable technique. In one example, additive manufacturing may be used for precise control over the geometry and integration of the different domains, enhancing the reactor's overall performance and efficiency.

The first region 1204 (i.e., the reaction domain) includes a catalyst bed, such as catalyst bed 206 shown in FIG. 2. In some forms, the catalyst bed includes a catalyst packed bed with a plurality of catalyst pellets 208 as shown in FIG. 2. The plurality of catalyst pellets may include any suitable catalyst based on specific chemical reactions and processes intended for the reactor. In one form, the plurality of catalyst pellets may comprise a nickel-based catalyst. However, it is contemplated that any suitable catalyst may be used including, but not limited to, cobalt-based catalyst, iron-based catalyst, palladium and platinum catalyst, and the like.

The second region 1206 (i.e., the heat spreading domain) includes one or more vapor chambers as shown and described with reference to FIGS 6-11. It is contemplated that the second region 1206 may include any suitable number or types of vapor chambers to reduce thermal gradients that form due to a reaction or to heating/cooling flows in the third region 1208. As described above, the vapor chambers operate through an evaporation-condensation cycle to provide uniform heat distribution to the first region 1204.

The third region 1208 (i.e., the thermal management domain) includes a thermal management fluid. The thermal management fluid may comprise a heating medium or a cooling medium depending on the reactor operational requirements. In some forms, the third region 1208 defines conduits or passageways fluidly connected to an inlet (i.e., the second inlet 122 as shown in FIG. 1) and an outlet (i.e., the second outlet 124 as shown in FIG. 1) to transfer heat to or remove heat from the first region 1204 via the second region 1206 for precise thermal regulation and optimal reactor performance.

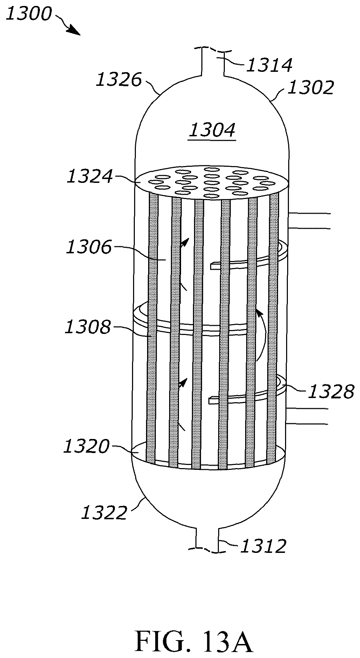

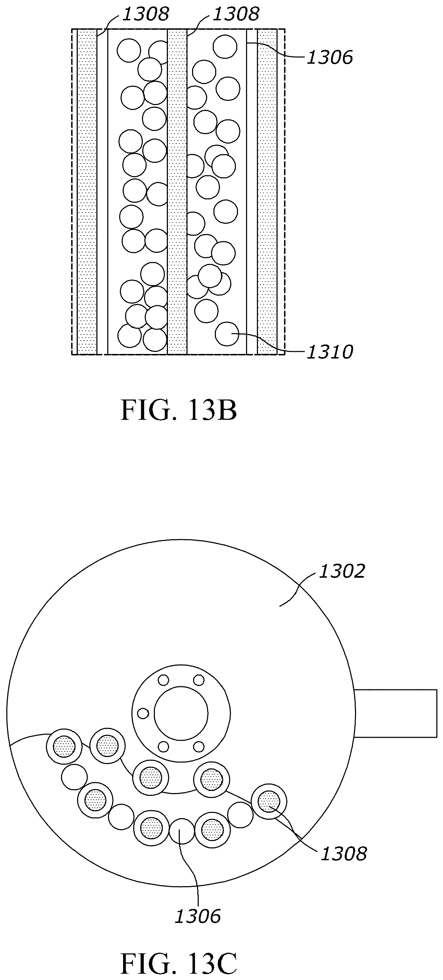

It is contemplated that while a first region 1204, a second region 1206, and a third region 1208 are depicted in FIGS. 12A and 12B, the reactor 1200 may include any suitable number of regions and/or domains. In some forms, the reactor 1200 may have two integrally formed domains including the first region 1204 (i.e., the reaction domain) and the second region 1206 (i.e., the heat spreading domain). In other forms, the reactor 1200 may include four or more integrally formed domains or regions. Referring to FIG. 13 (i.e., FIG. 13A, FIG. 13B and FIG. 13C), another embodiment of a reactor 1300 is shown. FIG. 13A illustrates a perspective view of the reactor 1300. FIG. 13B illustrates a cut away section view of the reactor 1300. FIG. 13C illustrates a cut away top view of the reactor 1300.

In the embodiment depicted in FIG. 13, the exemplary reactor 1300 may be a shell-and-tube reactor. The reactor 1300 includes a reactor vessel 1302, a reactor core 1304, a plurality of tubes 1306, and a plurality of vapor chambers 1308. Other components of the reactor 1300 include an inlet 1312 and outlet 1314, a first tube plate 1320 proximal to a first end 3122 of the reactor vessel 1302, a second tube plate 1324 proximal to a second end 1326 of the reactor vessel 1302, and one or more baffle plates 1328 positioned in the reactor core 1304.

The plurality of tubes 1306 comprise a catalyst 1310. The catalyst 1310 is distributed within the plurality of tubes 1306 and selected based on a desired chemical reaction. The catalyst 1310 may be in the form of pellets, beads, or a coated surface. In one form, the catalyst 1310 may comprise a nickel-based catalyst. However, it is contemplated that any suitable catalyst may be used including, but not limited to, cobalt-based catalyst, iron-based catalyst, palladium and platinum catalyst, and the like.

The plurality of vapor chambers 1308 may include any one of or a combination of the various vapor chambers shown and described with reference to FIGS 6-11. As discussed in greater detail above, the plurality of vapor chambers 1308 operate by using an evaporation-condensation cycle of a working fluid (not shown) held within the plurality of vapor chambers 1308. In other words, the one or more vapor chambers 1308 spread heat through internal phase change heat transfer to minimize the thermal gradients that form in the catalyst 1310 and maintain the catalyst 1310 within an effective temperature range for increased reaction efficiency.

The first tube plate 1320 and the second tube plate 1324 support the plurality of tubes 1306 and the plurality of vapor chambers 1308. The plurality of tubes 1306 axially extend between the first tube plate 1320 and the second tube plate 1324. Similarly, the plurality of vapor chambers 1308 axially extend between the first tube plate 1320 and the second tube plate 1324. In some forms, the plurality of tubes 1306 and plurality of vapor chambers 1308 are arranged in a parallel configuration within the reactor core 1304 between first tube plate 1320 and second tube plate 1324.

As shown in FIG. 13A and 13C, the plurality of vapor chambers 1308 are distributed around the plurality of tubes 1306. In addition, the plurality of vapor chambers 1308 are arranged within the plurality of tubes 1306 (i.e., extend through the catalyst 1310) as shown in FIG. 13B. While the plurality of vapor chambers 1308 are shown as being positioned around and through the plurality of tubes 1306, it is contemplated that the plurality of tubes 1306 and the plurality of vapor chambers 1308 may be arranged in various configurations within the reactor vessel 1302. In some forms, the plurality of vapor chambers 1308 (or a single vapor chamber) may be positioned only around the plurality of tubes 1306. In other forms, the plurality of vapor chambers 1308 may be arranged only within plurality of tubes 1306. In some other forms, the plurality of vapor chambers 1308 may be arranged around the plurality of tubes 1306 and within at least one of the plurality of tubes 1306.

Further aspects of the disclosure are provided by the subject matter of the following clauses:
A reactor comprising: one or more first regions defining a reaction domain and comprising a catalyst bed; and one or more second regions in thermal communication with the one or more first regions, the one or more second regions defining a heat spreading domain and comprising one or more vapor chambers.

The reactor of any preceding clause, further comprising one or more third regions defining a thermal management region and containing a thermal management fluid, the one or more third regions in thermal communication with the one or more first regions and/or the one or more second regions.

The reactor of any preceding clause, wherein a respective one of the one or more second regions is disposed in a volume between a respective one of the one or more first regions and a respective one of the one or more third regions.

The reactor of any preceding clause, wherein a respective one of the one or more first regions is disposed in a volume between a respective one of the one or more second regions and a respective one of the one or more third regions.

The reactor of any preceding clause, wherein the thermal management fluid comprises a heating medium or a cooling medium to control a temperature of the one or more first regions or the one or more second regions.

The reactor of any preceding clause, wherein each vapor chamber comprises a hermetic envelope defining an enclosed volume to hold a working fluid in saturated conditions therein.

The reactor of any preceding clause, wherein each vapor chamber is configured to spread heat within the one or more first regions through internal phase change of the working fluid within the working fluid.

The reactor of any preceding clause, wherein the one or more vapor chambers each include a hermetic envelope defining an enclosed volume to hold a working fluid in saturated conditions, wherein the hermetic envelope includes one or more evaporation sections to absorb heat from the one or more first regions and one or more condenser sections to release heat to the one or more first regions.

The reactor of any preceding clause, wherein the one or more vapor chambers includes a porous wick attached to an inner surface of the hermetic envelope configured to transport the working fluid between the condenser sections and the evaporation sections through capillary forces.

The reactor of any preceding clause, wherein the one or more vapor chambers are configured to transport the working fluid between the evaporation sections and the condensers section through pressure forces.

The reactor of any preceding clause, wherein the one or more vapor chambers are configured to transport the working fluid between the evaporation sections and the condenser sections through acceleration forces.

The reactor of any preceding clause, wherein the one or more vapor chambers further include a non-condensable gas in the enclosed volume of the hermetic envelope.

The reactor of any preceding clause, wherein the one or more vapor chambers include a thermal diode heat pipe comprising a hermetic envelope defining an enclosed volume to hold a working fluid in saturated conditions and a reservoir to trap the working fluid for unidirectional heat transfer.

The reactor of any preceding clause, wherein the one or more vapor chambers include an oscillating heat pipe comprising a hermetic envelope defining an enclosed volume and a meandering channel filled with a working fluid in saturated conditions.

The reactor of any preceding clause, wherein the one or more vapor chambers include a loop heat pipe or a capillary pumped loop heat pipe.

A reactor comprising: one or more first regions defining a reaction domain and containing a catalyst bed; and one or more second regions in thermal communication with the one or more first regions, the one or more second regions defining a heat spreading domain and containing one or more vapor chambers; wherein the one or more first regions and the one or more second regions are integrally formed.

The reactor of any preceding clause, further comprising one or more third regions defining a thermal management region and containing a thermal management fluid, the one or more third regions are integrally formed with the one or more first regions and the one or more second regions.

The reactor of any preceding clause, wherein a respective one of the one or more second regions is disposed in a volume between a respective one of the one or more first regions and a respective one of the one or more third regions.

The reactor of any preceding clause, wherein a respective one of the one or more first regions is disposed in a volume between a respective one of the one or more second regions and a respective one of the one or more third regions.

A reactor comprising: one or more first regions defining a reaction domain and containing a catalyst bed; and one or more second regions in thermal communication with the one or more first regions, the one or more second regions defining a thermal management region and containing a thermal management fluid; wherein the one or more first regions and the one or more second regions are integrally formed.

A reactor comprising: one or more first regions defining a reaction domain and comprising a catalyst bed; and one or more second regions in thermal communication with the one or more first regions, the one or more second regions defining a heat spreading domain and comprising one or more vapor chambers.

The reactor of any preceding clause, further comprising one or more third regions defining a thermal management region and comprising a thermal management fluid, the one or more third regions in thermal communication with the one or more first regions and/or the one or more second regions.

The reactor of any preceding clause, wherein a respective one of the one or more second regions is disposed in a volume between a respective one of the one or more first regions and a respective one of the one or more third regions.

The reactor of any preceding clause, wherein a respective one of the one or more first regions is disposed in a volume between a respective one of the one or more second regions and a respective one of the one or more third regions.

The reactor of any preceding clause, wherein the thermal management fluid comprises a heating medium or a cooling medium to control a temperature of the one or more first regions or the one or more second regions.

The reactor of any preceding clause, wherein each vapor chamber comprises a hermetic envelope defining an enclosed volume to hold a working fluid in saturated conditions therein.

The reactor of any preceding clause, wherein the one or more vapor chambers comprise a hermetic envelope defining an enclosed volume to hold a working fluid in saturated conditions, wherein the hermetic envelope comprises one or more evaporation sections to absorb heat from the one or more first regions and one or more condenser sections to release heat to the one or more first regions.

The reactor of any preceding clause, wherein the one or more vapor chambers comprises a porous wick attached to an inner surface of the hermetic envelope configured to transport the working fluid between the one or more condenser sections and the one or more evaporation sections through capillary forces.

The reactor of any preceding clause, wherein the one or more vapor chambers are configured to transport the working fluid between the one or more evaporation sections and the one or more condenser sections through pressure forces.

The reactor of any preceding clause, wherein the one or more vapor chambers are configured to transport the working fluid between the one or more evaporation sections and the one or more condenser sections through acceleration forces.

The reactor of any preceding clause, wherein the one or more vapor chambers further comprise a non-condensable gas in the enclosed volume of the hermetic envelope.

The reactor of any preceding clause, wherein the one or more vapor chambers comprise a thermal diode heat pipe comprising a hermetic envelope defining an enclosed volume to hold a working fluid in saturated conditions and a reservoir to trap the working fluid for unidirectional heat transfer.

The reactor of any preceding clause, wherein the one or more vapor chambers comprise an oscillating heat pipe comprising a hermetic envelope defining an enclosed volume and a meandering channel in which a working fluid in saturated conditions is disposed.

The reactor of any preceding clause, wherein the one or more vapor chambers comprise a loop heat pipe or a capillary pumped loop heat pipe.

A reactor comprising: one or more first regions defining a reaction domain and comprising a catalyst bed; and one or more second regions in thermal communication with the one or more first regions, the one or more second regions defining a heat spreading domain and comprising one or more vapor chambers; wherein the one or more first regions and the one or more second regions are integrally formed.

The reactor of any preceding clause, further comprising one or more third regions defining a thermal management region and comprising a thermal management fluid, wherein the one or more third regions are integrally formed with the one or more first regions and the one or more second regions.

The reactor of any preceding clause, wherein a respective one of the one or more second regions is disposed in a volume between a respective one of the one or more first regions and a respective one of the one or more third regions.

The reactor of any preceding clause, wherein a respective one of the one or more first regions is disposed in a volume between a respective one of the one or more second regions and a respective one of the one or more third regions.

The reactor of any preceding clause, wherein the one or more vapor chambers comprise a hermetic envelope defining an enclosed volume to hold a working fluid in saturated conditions, wherein the hermetic envelope comprises one or more evaporation sections to absorb heat from the one or more first regions and one or more condenser sections to release heat to the one or more first regions.

A reactor comprising: one or more first regions defining a reaction domain and comprising a catalyst bed; and one or more second regions in thermal communication with the one or more first regions, the one or more second regions defining a thermal management region and comprising a thermal management fluid; wherein the one or more first regions and the one or more second regions are integrally formed.

## Claims

1. A reactor comprising:
one or more first regions (302) defining a reaction domain and comprising a catalyst bed
(308); and
one or more second regions (304) in thermal communication with the one or more first regions (302), the one or more second regions (304) defining a heat spreading domain and comprising one or more vapor chambers (310).

2. The reactor vessel of claim 1, further comprising one or more third regions (306) defining a thermal management region and comprising a thermal management fluid (126), the one or more third regions (306) in thermal communication with the one or more first regions (302) and/or the one or more second regions (204).

3. The reactor vessel of claim 2, wherein a respective one of the one or more second regions (304) is disposed in a volume (312) between a respective one of the one or more first regions (302) and a respective one of the one or more third regions (306).

4. The reactor vessel of claim 2 or 3, wherein a respective one of the one or more first regions (302) is disposed in a volume (412) between a respective one of the one or more second regions (304) and a respective one of the one or more third regions (306).

5. The reactor vessel of any of claims 2 to 4, wherein the thermal management fluid (126) comprises a heating medium or a cooling medium to control a temperature of the one or more first regions (302) or the one or more second regions (304).

6. The reactor vessel of any preceding claim, wherein each vapor chamber (310) comprises a hermetic envelope (602) defining an enclosed volume (604) to hold a working fluid (608)(610) in saturated conditions therein.

7. The reactor vessel of any preceding claim, wherein the one or more vapor chambers (310) comprise a hermetic envelope (602) defining an enclosed volume (604) to hold a working fluid (608)(610) in saturated conditions, wherein the hermetic envelope (602) comprises one or more evaporation sections (612) to absorb heat from the one or more first regions (302) and one or more condenser sections (614) to release heat to the one or more first regions (302).

8. The reactor vessel of claim 7, wherein the one or more vapor chambers (310) comprises a porous wick (606) attached to an inner surface (618) of the hermetic envelope (602) configured to transport the working fluid (608)(610) between the condenser sections (614) and the evaporation sections (612) through capillary forces.

9. The reactor vessel of claim 7 or 8, wherein the one or more vapor chambers (310) are configured to transport the working fluid (608)(610) between the evaporation sections (612) and the condensers section (614) through pressure forces.

10. The reactor vessel of any of claims 7 to 9, wherein the one or more vapor chambers (310) are configured to transport the working fluid (608)(610) between the evaporation sections (612) and the condenser sections (614) through acceleration forces.

11. The reactor vessel of any of claims 7 to 10, wherein the one or more vapor chambers (310) further comprise a non-condensable gas (914) in the enclosed volume (904) of the hermetic envelope (902).

12. The reactor vessel of any preceding claim, wherein the one or more vapor chambers (310) comprise a thermal diode heat pipe (1000) comprising a hermetic envelope (1002) defining an enclosed volume (1004) to hold a working fluid (1016)(1018) in saturated conditions and a reservoir (1008) to trap the working fluid (1016)(1018) for unidirectional heat transfer.

13. The reactor vessel of any preceding claim, wherein the one or more vapor chambers (310) comprise an oscillating heat pipe (800) comprising a hermetic envelope (802) defining an enclosed volume (804) and a meandering channel (806) in which with a working fluid (820)(824) in saturated condition is disposed.

14. The reactor vessel of any preceding claim, wherein the one or more vapor chambers (310) comprise a loop heat pipe (1100) or a capillary pumped loop heat pipe (1100).

15. The reactor of any preceding claim, wherein the one or more first regions (302) and the one or more second regions (304) are integrally formed.
